# FASCICULE DE BREVET EUROPEEN

(11) **EP 4 111 041 B1**
(45) Date de publication et mention de la délivrance du brevet: **27.03.2024**
(21) Numéro de dépôt: 21711937.9
(22) Date de dépôt: 23.02.2021
(51) Int. Cl.: F02C 7/22, F23D 11/38, F23R 3/28, F02C 9/26

(54) **ENSEMBLE DE COMBUSTION**
VERBRENNUNGSANLAGE
COMBUSTION ASSEMBLY

(30) Priorité: 24.02.2020 FR 2001817
(43) Date de publication de la demande: 04.01.2023
(73) Titulaire: Safran Helicopter Engines, 64510 Bordes (FR)
(72) Inventeur: SAVARY, Nicolas, Roland, Guy, 77550 MOISSY-CRAMAYEL, FRANCE 77550 MOISSY- CRAMAYEL (FR); LAILHACAR, Christophe, 77550 MOISSY-CRAMAYEL, FRANCE 77550 MOISSY- CRAMAYEL (FR); LAMAISON, Olivier, 77550 MOISSY-CRAMAYEL, FRANCE 77550 MOISSY- CRAMAYEL (FR); LAVIGNOTTE, Stéphane, 77550 MOISSY-CRAMAYEL, FRANCE 77550 MOISSY- CRAMAYEL (FR)
(74) Mandataire: Ernest Gutmann - Yves Plasseraud S.A.S.
(86) Numéro de dépôt international: PCT/FR2021/050313
(87) Numéro de publication internationale: WO 2021/170947

(56) Documents cités:
- CA-A1- 2 981 540
- FR-A1- 3 059 047
- US-A1- 2018 328 588

## Description

### Domaine technique

La présente divulgation concerne un ensemble de combustion pour turbomachine.

### Technique antérieure

Une turbomachine comporte classiquement, d'amont en aval dans le sens de circulation des gaz au sein de la turbomachine, une soufflante, un ou plusieurs étages de compresseurs, par exemple un compresseur basse pression et un compresseur haute pression, une chambre de combustion, un ou plusieurs étages de turbine, par exemple une turbine haute pression et une turbine basse pression, et une tuyère d'échappement des gaz.

La chambre de combustion est délimitée par des carters de révolution interne et externe coaxiaux et reliés en amont à un carter annulaire de fond de chambre. Le carter externe de la chambre est fixé sur une enveloppe externe de la turbomachine, le carter interne de la chambre étant fixé sur une enveloppe interne ou relié au carter externe.

La chambre de combustion comprend par ailleurs un tube à flamme ou foyer, qui est le siège de la combustion des gaz.

L'alimentation en carburant du tube à flamme est réalisée par une pluralité de dispositifs d'injection de carburant qui débouche dans le tube à flamme. Chaque dispositif d'injection comprend un limiteur de débit carburant qui permet du fait de sa forme de contrôler le débit de carburant alimentant en aval un injecteur de carburant dont une extrémité aval débouche dans le tube à flammes. FR3059047 et US2018/328588 décrivent des exemples d'injecteurs pour une chambre de combustion de turbomachine.

Classiquement, l'injecteur de débit carburant et le limiteur de débit carburant sont réalisés de manière indépendante du fait de leur conformation tridimensionnelle complexes. Cependant, la dissociation de la fabrication de la pièce réalisant l'alimentation de l'injecteur qui a son tour réalise le mélange du carburant avec l'air pour sa pulvérisation dans la chambre ne rend pas optimal le placement du limiteur relativement à l'injecteur de sorte qu'un impact peut en résulter sur la pulvérisation du carburant dans le tube à flammes.

### Résumé

La présente divulgation concerne ainsi un ensemble de combustion pour une turbine à gaz comprenant un tube à flamme et des moyens d'alimentation en carburant comportant un limiteur de débit alimentant un injecteur, caractérisé en ce que le limiteur de débit et l'injecteur du carburant sont formés d'une seule pièce.

Cette réalisation permet de garantir un placement optimal de l'injecteur de pulvérisation de carburant relativement au limiteur de débit de sorte à avoir une combustion optimale dans le tube à flamme. Le limiteur de débit et l'injecteur de carburant sont avantageusement fabriqués par fabrication additive qui peut être du type fusion laser d'une poudre.

Le limiteur de débit peut comprendre un premier conduit de carburant et un second conduit de carburant comprenant chacun une succession de chambres reliées entre elles par des portions à section réduites, le premier conduit et le second conduit étant reliés à une entrée de carburant, le premier conduit débouchant en aval dans un premier canal de l'injecteur de carburant et le second conduit débouchant en aval dans un second canal de l'injecteur.

L'agencement en série des chambres permet d'obtenir une meilleure précision de dosage du débit que si on réalisait un trou unique avec le même outil de production par effet de dispersion statistique. Ceci est particulièrement vrai pour les injecteurs réalisés en fabrication additive, dont les tolérances de fabrication sur des orifices isolés ne sont pas compatible avec celles d'un dosage carburant. Ainsi, en multipliant les chambres et les portions à section réduite en série, il est possible de moyenner les défauts de forme consécutif d'une fabrication additive, ce qui permet d'obtenir la précision finale souhaitée laquelle peut être d'autant meilleure que le nombre de chambres et de portion à section réduite d'orifices en série est grand.

Le premier conduit et le second conduit peuvent s'étendent dans un plan et plus particulièrement dans un même plan. Cet agencement dit « à plat » permet une intégration des premier et second conduit dans une bride de fixation de l'injecteur déjà existante, sans ajout d'encombrement et de masse.

L'injecteur de carburant peut présenter une forme sensiblement en L dont une première branche comporte un premier canal dont une extrémité amont est reliée au premier conduit du limiteur de débit et une extrémité aval débouche dans un premier embout de sortie de carburant, et dont une seconde branche comporte un second embout de sortie de carburant relié à une extrémité aval d'un second canal s'étend dans la première branche et dans la seconde branche.

### Brève description des dessins

D'autres caractéristiques, détails et avantages apparaîtront à la lecture de la description détaillée ci-après, et à l'analyse des dessins annexés, sur lesquels :
[Fig. 1] est une vue schématique en perspective d'un ensemble de combustion selon l'invention.
[Fig. 2] est une représentation schématique en perspective de moyens d'alimentation en carburant selon l'invention ;
[Fig. 3] est une représentation schématique en perspective avec une découpe de la pièce de la figure 2 ;
[Fig. 4] est une vue schématique en coupe de l'injecteur de carburant.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

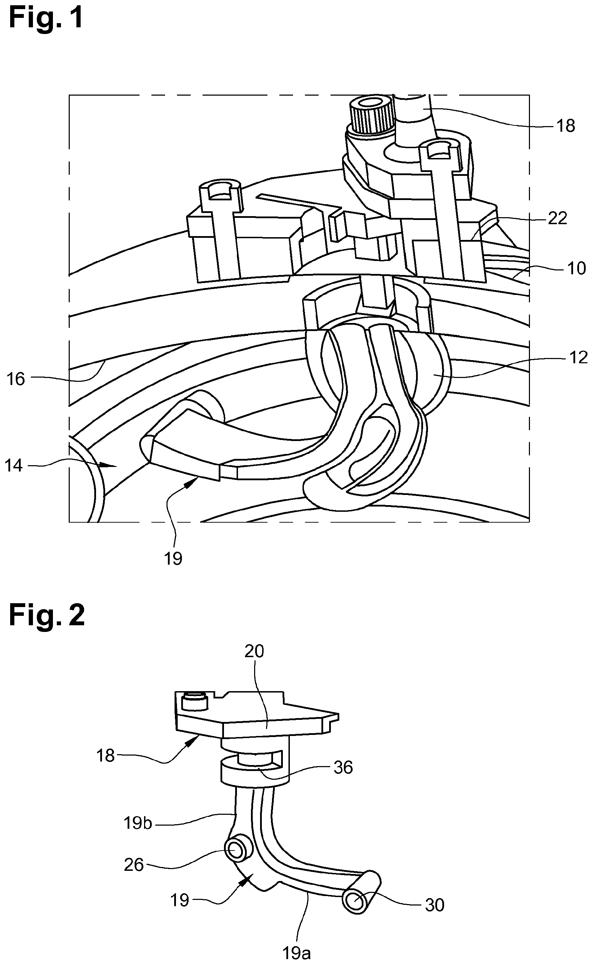

La figure 1 représente un carter 10 et un ensemble de combustion 12 selon la présente divulgation qui est supporté par le carter 10. Comme on peut le voir sur la figure 1, l'ensemble de combustion 12 comprend un tube à flamme 14 à l'intérieur duquel débouche des moyens d'alimentation en carburant. Le tube 14 à flamme comprend une virole annulaire interne (non visible) et une virole annulaire externe 16. Ces moyens d'alimentation en carburant comprennent un limiteur 18 de débit alimentant en carburant un injecteur 19 de carburant. Plus précisément, le limiteur 18 de débit comprend une embase 20 ou platine radialement externe qui est fixée sur la face externe d'un bossage 22 du carter 10 afin d'assurer une référence de positionnement du limiteur 18 de débit sur le carter 10. L'injecteur 19 de carburant présente une forme sensiblement en L formée d'une première branche 19a et d'une seconde branche 19b reliée à l'une à l'autre.

Comme on peut le voir sur les figures 2 à 4, l'injecteur 19 qui est ici une canne de pré-vaporisation du carburant comprend donc une première branche 19a à l'intérieur de laquelle est formé un premier canal 24 d'écoulement d'un mélange air/carburant qui sort à l'extrémité aval du premier canal 24 par un premier embout 26. Un second canal 28 s'étend dans la première branche 19a et dans la seconde branche 19b et débouche à son extrémité aval dans un second embout 30. Le premier canal 24 est alimenté en carburant par un premier conduit 32 du limiteur de débit et le second canal est 28 alimenté en carburant par un second canal 34 du limiteur de débit 18.

Le limiteur 18 de débit comprend ainsi le premier conduit 32 de carburant et le second conduit 34 de carburant qui sont distincts l'un de l'autre. Ces deux conduits 32, 34 de carburant sont alimentés par une source commune de carburant mais comprennent des sorties distinctes de carburant. Le premier conduit 32 débouche en sortie en vis-à-vis de l'extrémité amont du premier canal 24 de l'injecteur 19. Le second conduit 28 débouche en sortie en vis-à-vis de l'extrémité amont du second canal 28 de l'injecteur 19. Le premier conduit 32 et le second conduit 34 comprennent chacun une succession de chambres reliées entre elles par des portions à section réduite.

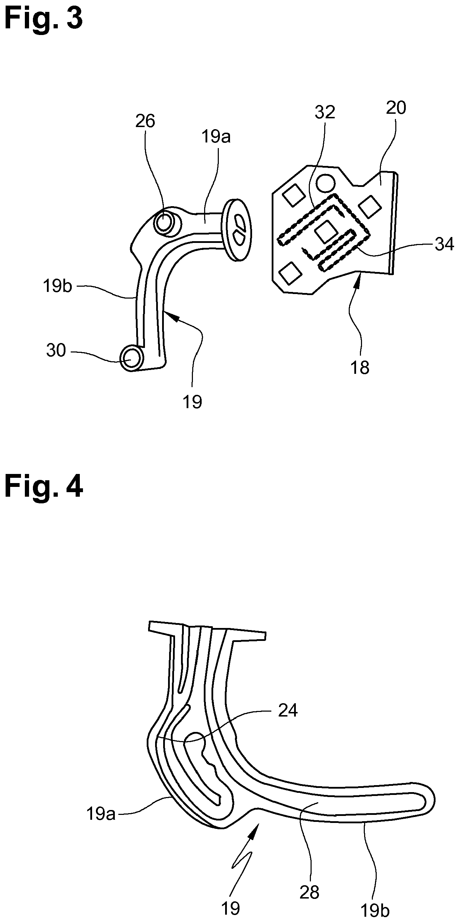

Comme cela peut être observée sur la figure 3, le premier conduit 32 et le second conduit 34 s'étendent dans un plan et dans l'exemple représenté dans un même plan. Cet agencement dit « à plat » permet une intégration des premier 32 et second 34 conduits dans une bride de fixation de l'injecteur déjà existante, sans ajout d'encombrement et de masse.

Comme cela est visible sur la figure 1 et sur la figure 2, une entrée d'air 36 est prévue à la jonction de l'injecteur 19 de carburant et du limiteur 18 de carburant. Cette entrée 36 d'air est agencée dans l'espace annulaire formé entre le carter 10 et la virole externe 16.

Selon la présente divulgation, l'injecteur 19 et le limiteur 18 sont fabriqués d'une seule pièce par exemple par fabrication additive. En particulier, on peut envisager de fabriquer cette pièce par fusion laser d'une poudre.

## Revendications

1. Ensemble de combustion pour une turbine à gaz comprenant un tube à flamme (14) et des moyens d'alimentation en carburant comportant un limiteur (18) de débit alimentant un injecteur (19), où le limiteur (18) de débit et l'injecteur (19) du carburant sont formés d'une seule pièce, **caractérisé en ce que** le limiteur de débit (18) comprend un premier conduit (32) de carburant et un second conduit (34) de carburant comprenant chacun une succession de chambres reliées entre elles par des portions à section réduites, le premier conduit (32) et le second conduit (34) étant reliés à une entrée de carburant, le premier conduit (32) débouchant en aval dans un premier canal (24) de l'injecteur (19) de carburant et le second conduit (34) débouchant en aval dans un second canal (28) de l'injecteur (19).

2. Ensemble selon la revendication 1, dans lequel l'injecteur (19) de carburant présente une forme sensiblement en L dont une première branche (19a) comporte le premier canal (24) dont une extrémité amont est reliée au premier conduit (32) du limiteur (18) de débit et une extrémité aval débouche dans un premier embout (26) de sortie de carburant, et dont une seconde branche (19b) comporte un second embout (30) de sortie de carburant relié à une extrémité aval du second canal (28) qui s'étend dans la première branche (19a) et dans la seconde branche (19b).

3. Ensemble selon la revendication 1 ou 2, dans lequel au moins une entrée d'air (36) peut être formée à la jonction de l'injecteur (19) et du limiteur (18) de débit.

4. Turbomachine comprenant un ensemble selon l'une des revendications 1 à 3.

5. Procédé de fabrication d'un ensemble selon l'une des revendications 1 à 3, dans lequel le limiteur (18) de débit et l'injecteur (19) de carburant sont fabriqués par fabrication additive.

6. Procédé selon la revendication 5, dans lequel la fabrication additive est du type fusion laser d'une poudre.

## Patentansprüche

1. Verbrennungsanordnung für eine Gasturbine mit einem Flammrohr (14) und Mitteln zur Kraftstoffzufuhr mit einem Durchflussbegrenzer (18), über den ein Injektor (19) versorgt wird, wobei der Durchflussbegrenzer (18) und der Injektor (19) für den Kraftstoff einstückig ausgebildet sind,
**dadurch gekennzeichnet, dass** der Durchflussbegrenzer (18) eine erste Kraftstoffleitung (32) und eine zweite Kraftstoffleitung (34) umfasst, die jeweils eine Folge von Kammern umfassen, die durch Abschnitte mit verringertem Querschnitt miteinander verbunden sind, wobei die erste Leitung (32) und die zweite Leitung (34) mit einem Kraftstoffeinlass verbunden sind, wobei die erste Leitung (32) stromabwärts in einen ersten Kanal (24) des Kraftstoffinjektors (19) mündet und die zweite Leitung (34) stromabwärts in einen zweiten Kanal (28) des Injektors (19) mündet.

2. Anordnung nach Anspruch 1,
wobei der Kraftstoffinjektor (19) eine im Wesentlichen L-förmige Gestalt aufweist, von der ein erster Schenkel (19a) den ersten Kanal (24) umfasst, dessen stromaufwärts gelegenes Ende mit der ersten Leitung (32) des Durchflussbegrenzers (18) verbunden ist und dessen stromabwärts gelegenes Ende in einen ersten Kraftstoffauslassstutzen (26) mündet, und von dem ein zweiter Schenkel (19b) einen zweiten Kraftstoffauslassstutzen (30) aufweist, der mit einem stromabwärts gelegenen Ende des zweiten Kanals (28) verbunden ist, der sich in den ersten Schenkel (19a) und in den zweiten Schenkel (19b) erstreckt.

3. Anordnung nach Anspruch 1 oder 2,
wobei zumindest ein Lufteinlass (36) an der Verbindungsstelle zwischen dem Injektor (19) und dem Durchflussbegrenzer (18) ausgebildet sein kann.

4. Turbomaschine bzw. Turbotriebwerk mit einer Anordnung nach einem der Ansprüche 1 bis 3.

5. Verfahren zur Herstellung einer Anordnung nach einem der Ansprüche 1 bis 3,
wobei der Durchflussbegrenzer (18) und der Kraftstoffinjektor (19) durch additive Fertigung hergestellt werden.

6. Verfahren nach Anspruch 5,
wobei es sich bei der additiven Fertigung um ein Laserschmelzen von Pulver handelt.

## Claims

1. A combustion assembly for a gas turbine comprising a flame tube (14) and fuel supply means including a flow rate limiter (18) supplying an injector (19), wherein the flow rate limiter (18) and the fuel injector (19) are formed in one piece, **characterised in that** the flow rate limiter (18) comprises a first fuel conduit (32) and a second fuel conduit (34) each comprising a succession of chambers which are interconnected by reduced section portions, the first conduit (32) and the second conduit (34) being connected to a fuel inlet, the first conduit (32) opening downstream into a first channel (24) of the fuel injector (19) and the second conduit (34) opening downstream into a second channel (28) of the injector (19).

2. The assembly according to claim 1, wherein the fuel injector (19) has a substantially L-shape, a first branch (19a) of which includes the first channel (24) including an upstream end which is connected to the first conduit (32) of the flow rate limiter (18) and a downstream end which opens into a first fuel outlet end piece (26), and a second branch (19b) of which includes a second fuel outlet end piece (30) which is connected to a downstream end of the second channel (28) which extends in the first branch (19a) and in the second branch (19b).

3. The assembly according to claim 1 or 2, wherein at least one air inlet (36) can be formed at the junction of the injector (19) and the flow rate limiter (18).

4. A turbomachine comprising an assembly according to one of claims 1 to 3.

5. A method for manufacturing an assembly according to one of claims 1 to 3, wherein the flow rate limiter (18) and the fuel injector (19) are manufactured by additive manufacturing.

6. The method according to claim 5, wherein the additive manufacturing is of the laser powder fusion type.
